# EUROPEAN PATENT SPECIFICATION

(11) **EP 2 022 320 B1**
(45) Date of publication and mention of the grant of the patent: **18.11.2009**
(21) Application number: 07113882.0
(22) Date of filing: 06.08.2007
(51) Int. Cl.: A01G 3/025

(54) **Lopper**
Baummesser
Ébrancheur

(43) Date of publication of application: 11.02.2009
(73) Proprietor: Natura Innovation Ltd., Port Louis (MU)
(72) Inventor: Hua, Shan Su, Jhongshan District 104, Taipei (TW)
(74) Representative: Viering, Jentschura & Partner

(56) References cited:
- EP-A- 0 895 712
- US-A- 2 744 322
- US-A- 5 933 965
- US-B1- 6 178 644

## Description

### BACKGROUND OF THE INVENTION

### 1. Technical Field

The present invention relates to gardening tools, and more particularly, to a lopper for pruning tree branches and leaves lying high.

### 2. Description of Related Art

A lopper is typically implemented to prune tree branches and leaves lying high, which is composed of a slender rod and a pair of shears mounted on the top of the rod. One general objective of loppers is to facilitate effort-saving operation. To achieve this objective, various mechanisms employing linkages and levers are applied to loppers, such as those disclosed in US Patent 6,178,644 and US Patent 4,649,646. However, as the conventional lopper has the complexly structured and bulky shears mounted on the top of the rod, it would be difficult for a user to maintain the balance of the lopper while holding and operating the same. Besides, the heavy weight of the shears of the conventional lopper substantially burdens the user. Moreover, the intricate linkages and ropes settled around the shears are liable to get tangled with luxuriant branches and leaves where a user tries to stretch the shears through, therefore resulting in retarded efficiency of pruning.

One solution for the aforementioned conventional loppers has been disclosed in US Patent 5,950,315. It is obvious that the shears of lopper of '315 Patent are more simplified and efficient as compared with those of the aforementioned conventional loppers. Nevertheless, linkage efficiency is not perfectly performed in '315 Patent because the distance between the point where the chain exerts a force on the blade and the pivot point is not long enough for facilitating effort-saving pruning. Therefore, the inventor of the present invention further enhances the keenness of the blades with the attempt to compensate for the short of effort-saving efficiency. Furthermore, as the rod of the '315 lopper has a fixed length which is not extendable, if a user wants to prune branches and leaves at a relatively higher location, a ladder has to be implemented to lift the user and this may disadvantageously render inconvenience and danger to the user.

### SUMMARY OF THE INVENTION

The present invention has been accomplished under these circumstances in view. It is one objective of the present invention to provide a lopper that facilitates effort-saving pruning and has a rod with a length, which is adjustable according to the altitude of the branches and leaves to be pruned.

To achieve these and other objectives of the present invention, the lopper comprises a slender rod and a pruning means mounted on a top of the rod. The slender rod is composed of an inner tube and an outer tube telescoped mutually such that the inner tube is shiftable in the outer tube for changing the length as it jutting out from the outer tube. An extension-control unit is provided at the border region between the inner tube and the outer tube for positioning the inner tube. A fist actuating unit and a second actuating unit are provided at an outer surface of the outer tube. The fist and second actuating units are connected with the pruning means through a first rope, a second rope and a third rope so that when a user pulls the first or second actuating unit, a shear assembly of the pruning means can be closed to cut branches and leaves of plants.

The disclosed lopper has the advantages of effort-saving operation, simplified construction, light weight, easy gripping, easy controlling, and adjustable operational angle of the shear assembly. Additionally, the lopper of the present invention allows a user to adjust the extending length of the handling rod according to the altitude of the branches and leaves to be pruned.

### BRIEF DESCRIPTION OF THE DRAWINGS

The invention as well as a preferred mode of use, further objectives and advantages thereof, will best be understood by reference to the following detailed description of an illustrative embodiment when read in conjunction with the accompanying drawings, wherein:
**Figure 1** is a perspective view of the lopper of the present invention;
**Figure 2** is an exploded view of the pruning mechanism according to the present invention;
**Figure 3** is a front view of the pruning mechanism according to the present invention;
**Figure 4** is a back view of the pruning mechanism according to the present invention;
**Figure 5** is a partial schematic cross sectional view with the pruning mechanism sectioned for showing the assembly of the axial wheel and the flexible linking component;
**Figure 6** is another partial schematic cross sectional view with the pruning mechanism sectioned for showing the assembly of the axial wheel and the flexible linking component;
**Figure 7** is a sectional view taken along line 7-7 of FIG. 4;
**Figure 8** is a schematic drawing showing the pruning mechanism retracted;
**Figure 9** is a schematic drawing showing the pruning mechanism re-orientated;
**Figure 10** is an exploded view illustrating the shear assembly, pulley set and top portion of the inner tube;
**Figure 11** is a sectional assembly drawing of the components shown in FIG. 10;
**Figure 12** is an exploded view illustrating the extension-control unit and the peripheral components thereof;
**Figure 13** is a sectional assembly drawing of the components shown in FIG. 12;
**Figure 14** is a sectional view taken along line 14-14 of FIG. 13 showing the relationship between the extension-control unit and the inner tube;
**Figure 15** further illustrates the relationship between the extension-control unit and the inner tube according to the sectional view of FIG. 14;
**Figure 16** is an exploded view illustrating the first actuating unit and the peripheral components thereof;
**Figure 17** is a sectional assembly drawing of the components shown in FIG. 16;
**Figure 18** is an exploded view illustrating the second actuating unit and the peripheral components thereof;
**Figure 19** is a sectional assembly drawing of the components shown in FIG. 18;
**Figure 20** is a plane view of the disclosed subject matter;
**Figure 21** is another plane view of the disclosed subject matter showing the first actuating unit pulled downward;
**Figure 22** is another plane view of the disclosed subject matter showing the second actuating unit pulled downward;
**Figure 23** is another plane view of the disclosed subject matter showing the inner tube pulled out for extending the length of the slender rod; and
**Figure 24** is a sectional view showing the bottom of the inner tube retained at the extension-control unit.

### DETAILED DESCRIPTION OF THE PREFERRED EMBODIMENT

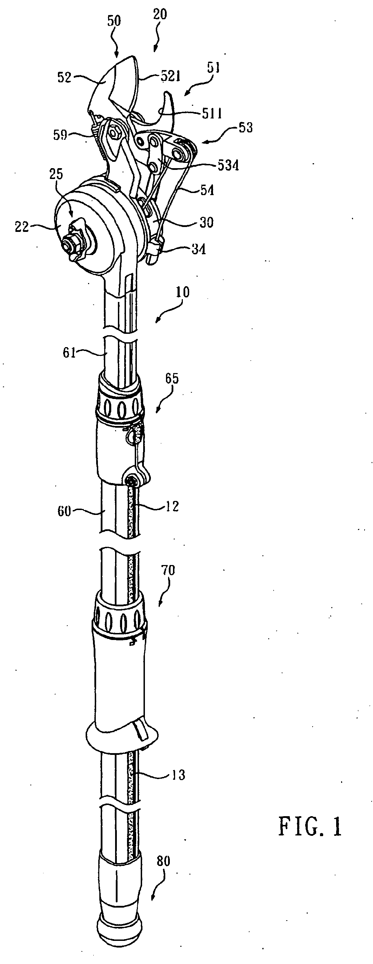

As shown in **Figure 1**, the lopper of the present invention primarily comprises a slender rod **10** and a pruning mechanism **20** mounted on a top of the slender rod **10.** The slender rod **10** includes an apparently visible outer tube **60,** an inner tube **61** shiftably telescoped inside the outer tube **60,** an extension-control unit **65** provided at a border region between the outer and inner tubes **60, 61,** a first actuating unit **70** deposited at the outer tube **60** and a second actuating unit **80** deposited at a bottom of the outer tube **60.**

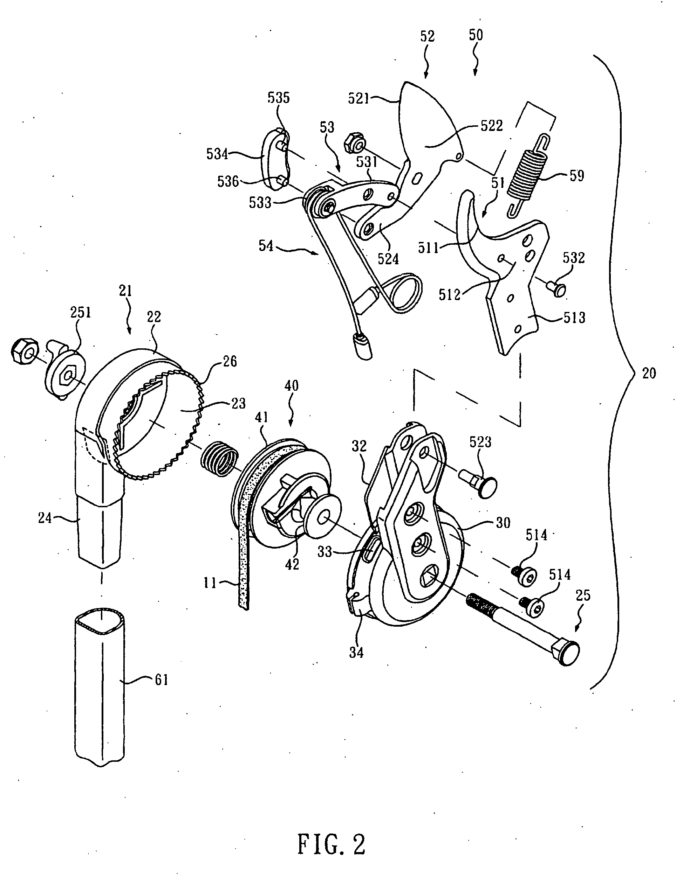

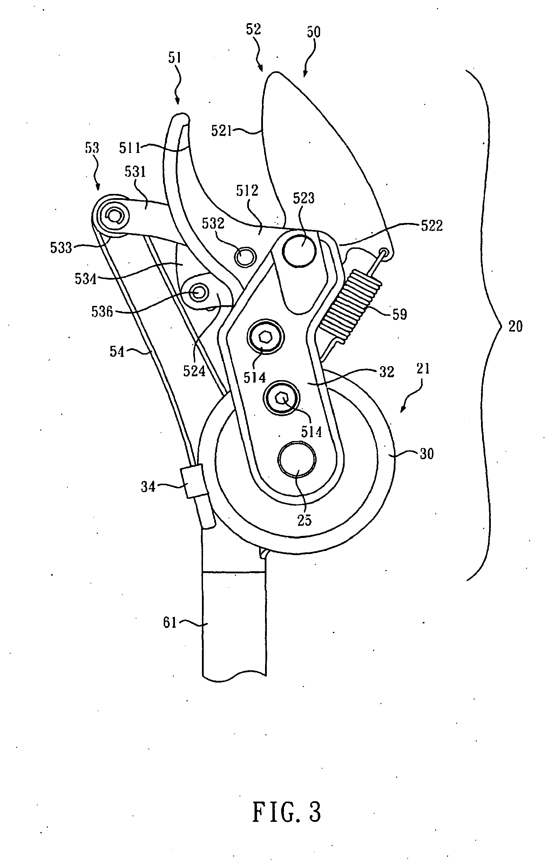

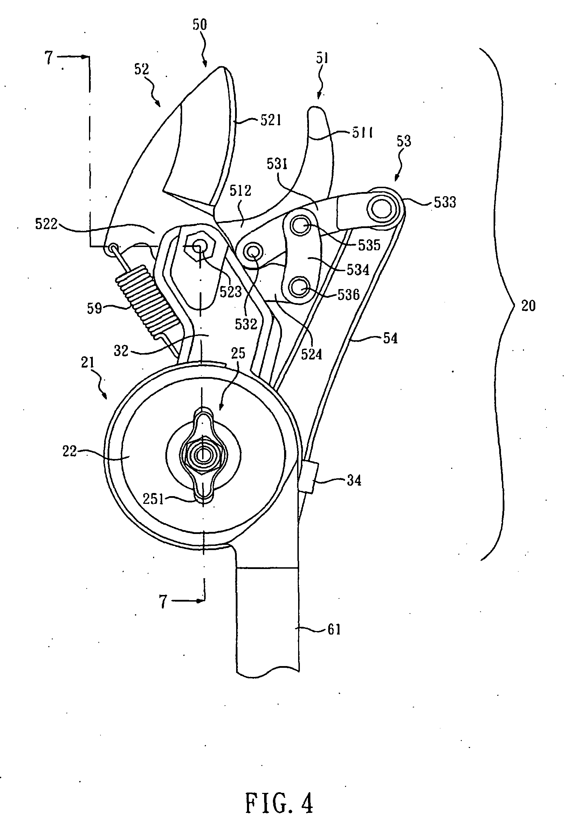

The pruning mechanism **20,** referring to **Figures 1** through **5**, comprises three parts, which are a drum **21,** an axial wheel **40** and a shear assembly **50,** wherein the drum **21** is constructed form combining a fixed portion **22** and a rotatable portion **30** face to face.

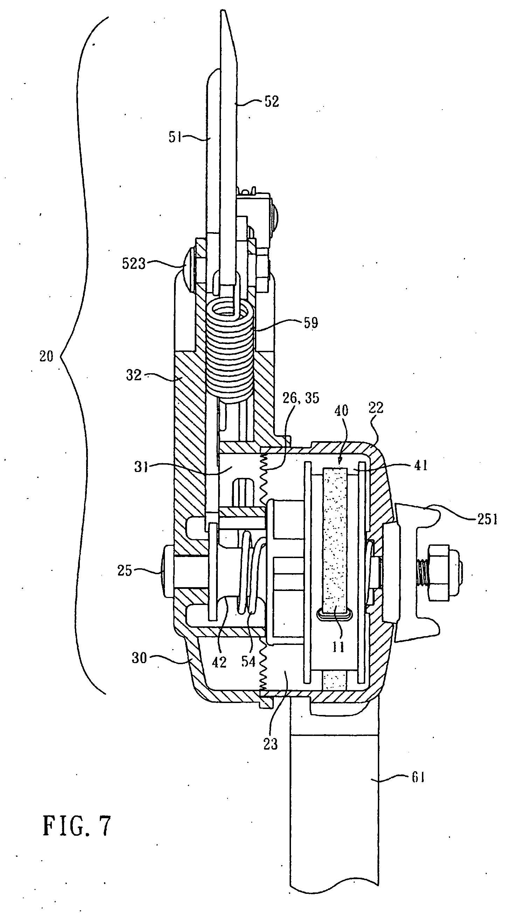

The fixed portion **22** is substantially shaped as a round box for providing a round space **23** therein. A combining portion **24** radially extends outward from the fixed portion **22** for being inserted into a top of the inner tube **61** of the slender rod **10.** The rotatable portion **30** is substantially shaped as a round box for providing a round space **31** therein (as shown in **FIG. 7**). A combining portion **32** radially extends outward from the rotatable portion **30** for being combined with the shear assembly **50.** The fixed portion **22** and the rotatable portion **30** are coaxially combined so that the axial wheel **40** can be accommodated in the round spaces **23, 31.** A manual-loosened bolt assembly **25** passes through the fixed portion **22,** the rotatable portion **30,** a center of the axial wheel **40** to combine the fixed portion **22** and the rotatable portion **30** together such that the axial wheel **40** can rotate about the bolt assembly **25.**

The axial wheel **40** includes a first reel **41** and a second reel **42** which are configured coaxially. The first reel **41** has a diameter greater than that of the second reel **42.** A first rope **11** has one end thereof fastened to the first reel **41** and is then wound around the first reel **41.** Afterward, an opposite end of the first rope **11** goes into the inner tube **61** of the slender rod **10.**

The shear assembly **50** comprises a fixed blade **51,** a movable blade **52,** a linkage **53** and a flexible linking component **54.** The fixed blade **51** has an integral structure that includes a block portion **511,** a pivot portion **512** and a combining portion **513,** wherein the combining portion **513** is fixed to the combining portion **32** of the rotatable portion **30** by means of a fastening component **514.** The movable blade **52** has an integral structure that includes a blade portion **521,** a pivot portion **522** and a driving portion **524.** The movable blade **52** is set in the combining portion **32** of the rotatable portion **30** abutting one side of the fixed blade **51** such that the pivot portion **522** thereof abuts the pivot portion **512** of the fixed blade **51.** Afterward, a pin **523** passing through the two pivot portions **512, 522** can be fixed to the combining portion **32** of the rotatable portion **30** so that the movable blade **52** can rotate about the pin **523.** The linkage **53** connected with the pivot portion **512** of the fixed blade **51** and the driving portion **524** of the movable blade **52** is a two-piece linkage. A first link **531** of the linkage **53** has one end thereof rotatably fastened to the pivot portion **512** of the fixed blade **51** by a pin **532** and has an opposite end thereof equipped with a pulley **533.** A second link **534** of the linkage **53** has one end thereof rotatably fastened to the first link **531** by a pin **535** and has an opposite end thereof rotatably fastened to the driving portion **524** of the movable blade **52** by a pin **536.** The flexible linking component **54** wound around the pulley **533** has one end thereof passing through a preformed hole **33** preset on the rotatable portion **30** and is then fixed at the second reel **42** of the axial wheel **40.** Then an opposite end of the flexible linking component **54** is fixed at a positioning member **34** outside the rotatable portion **30.** A returning spring **59** is provided between the pivot portion **522** of the movable blade **52** and the rotatable portion **30** for exerting a recoiling force on the movable blade **52** so that the blade portion **521** of the movable blade **52** is normally separated from the fixed blade **51.**

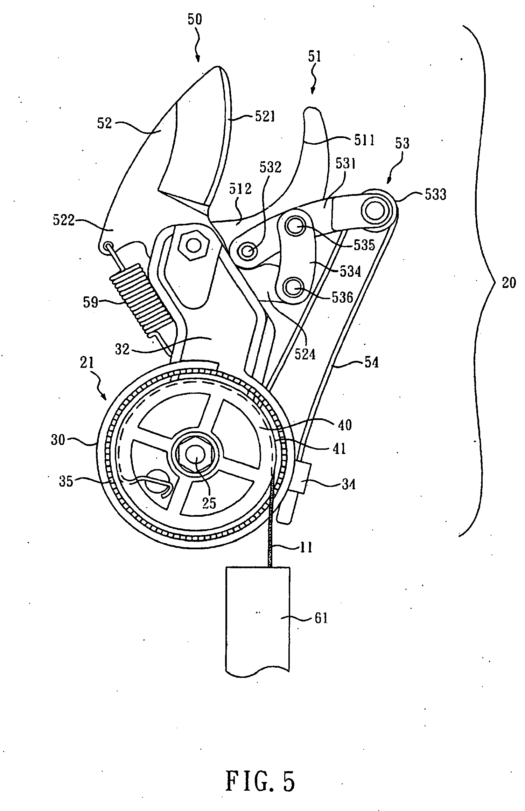

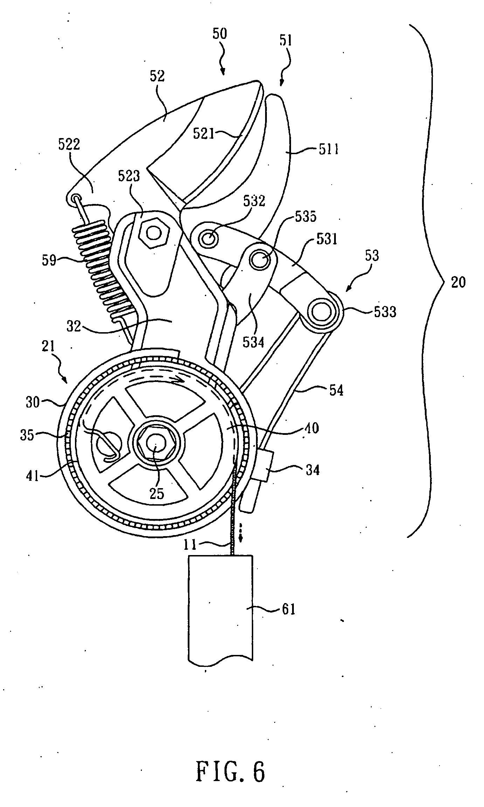

As shown in **Figures 5** and **6****,** when the first rope **11** is pulled downward for a predetermined length, the axial wheel **40** is clockwise turned for a predetermined angle. Thus more length of the flexible linking component **54** is reeled in the second reel **42** and a segment of the flexible linking component **54** between the positioning member **34** and the pulley **533** is shortened. When the first link **531** is driven by the flexible linking component **54** to swing downward against the pin **532,** the second link **534** and the driving portion **524** of the movable blade **52** are sequentially drawn the blade portion **521** so that the movable blade **52** is rotated about the pin **523** and the movable blade **521** is drawn close the fixed blade **51** to realize a cutting action. On the contrary, when the first rope **11** is released, the returning spring **59** immediately recoils to draw the blade portion **521** of the movable blade **52** away from the block portion **511** and cause all the connected components to move reversely.

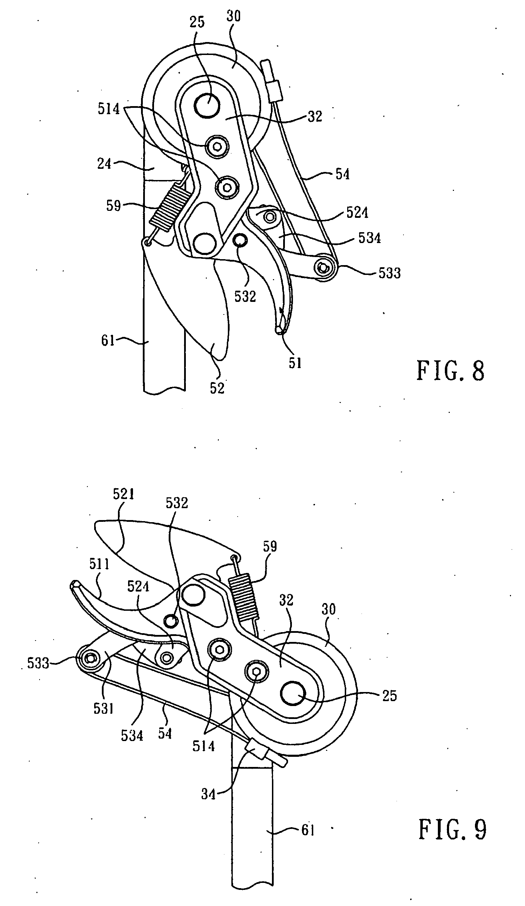

In **Figures 7** and **8****,** serrations **26, 30** are formed at facing edges of the fixed portion **22** and the rotatable portion **30,** respectively, so that after being fastened by the bolt assembly **25,** the fixed portion **22** and the rotatable portion **30** are braked mutually and the rotatable portion **30** and the shears thereon arc secured from unintentional rotating. The combination between the fixed portion **22** and the rotatable portion **30** can be tightened or loosened by manually screwing a loosen nut **251** of the bolt assembly **25**. When the pruning mechanism **20** is not in use, the nut **251** can be slightly loosened to cause the fixed portion **22** and the rotatable portion **30** to slightly separate such that the rotatable portion **30** can be rotate to turn the fixed blade **51** and the movable blade **52** of the shear assembly **50** to face the slender rod **10** for safe storage that facilitates preventing people from getting hurt by the shears. Referring to **Figure 9**, the adjustable bolt assembly **25** as previously described also suggests that the shear assembly **50** of the present invention can be re-oriented to avail a desired operational angle thereof. By conducting the above operation, an angular magnitude between the shear assembly **50** and the slender rod **10** can be adjusted and then fixed.

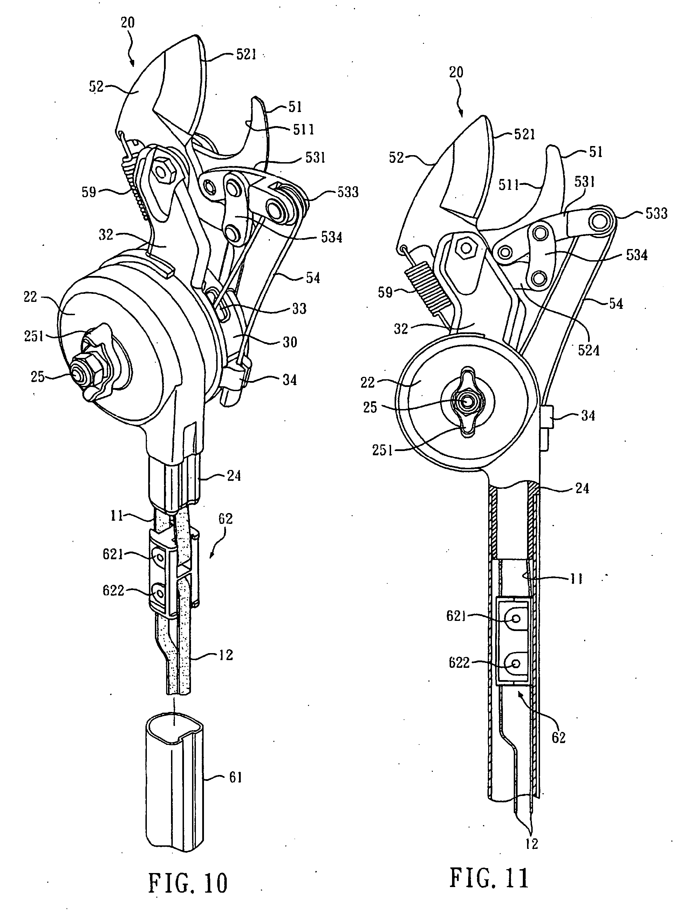

In **Figures 10** and **11**, the fixed portion **22** of the shear assembly **50** has the combining portion **24** radially extends outward therefrom to be inserted into the top of the inner tube **61**. A pulley set **62** that includes a first pulley **621** and a second pulley **622** may be movably settled in the inner tube **61**. The first rope **11** of the shear assembly **50** is wound around the first pulley **621** and has an open end fixed to the combining portion **24**.

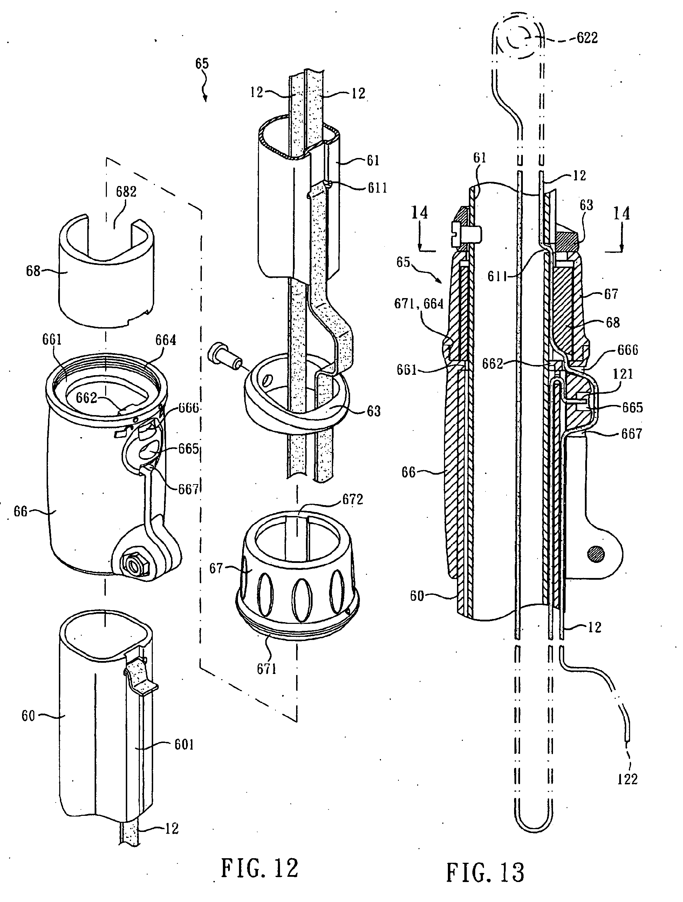

Referring to **Figures 12** and **13****,** the extension-control unit **65** provided at the border region between the outer and inner tubes **60, 61** is further illustrated. The extension-control unit **65** comprises a fixed member **66,** a rotatable member **67** and a C-shaped inner ring **68.** The fixed member **66** is fixed outside the top of the outer tube **60** and has an intrusive portion **661** for being retained with the top of the outer tube **60.** The C-shaped inner ring **68** is attached on the inner tube **61.** The rotatable member **67** is mounted around the C-shaped inner ring **68** and has an externally threaded portion **671** at the bottom thereof combined with an interiorly threaded portion **664** at a top of the fixed member **66.** A prominent packing portion **672** is provided at an inner wall of the rotatable member **67** to be positioned in an opening **682** of the C-shaped inner ring **68.**

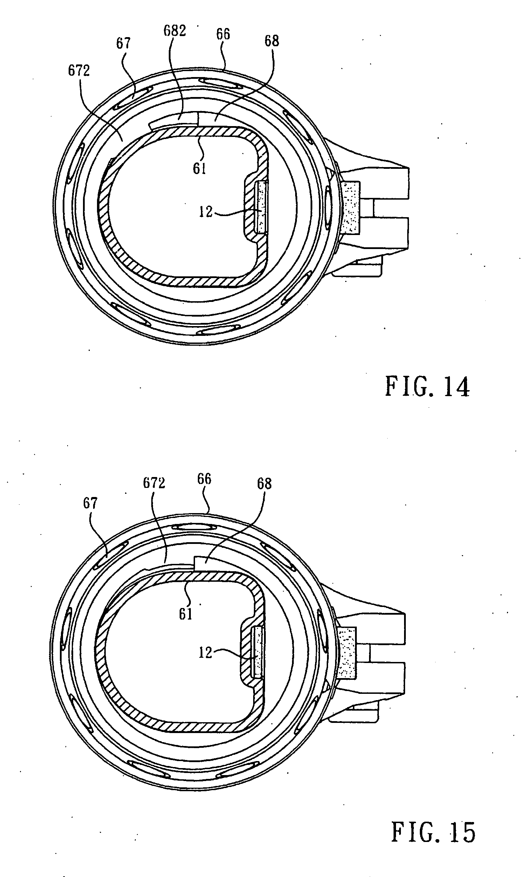

As shown in **Figures 14** and **15****,** while the rotatable member **67** can be rotated, the opening **682** of the C-shaped inner ring **68** substantially limits the displacement of the packing portion **672.** Thus, the rotatable angle of the rotatable member **67** is limited. Referring to **Figure 14****,** when the rotatable member **67** is rotated along one direction, the packing portion **672** abuts against a surface of the inner tube **61,** so that the inner tube **61** is retained from shifting along the outer tube **60.** On the contrary, in **Figure 15****,** when the rotatable member **67** is rotated along an opposite direction, the packing portion **672** is drawn apart from the surface of the inner tube **61,** so that the inner tube **61** is capable of shifting along the outer tube **60** to change the length it extending beyond the outer tube **60.** A first retaining piece **63** is fixed at the surface of the inner tube **61** (as shown in **Figures 12** and **13**).

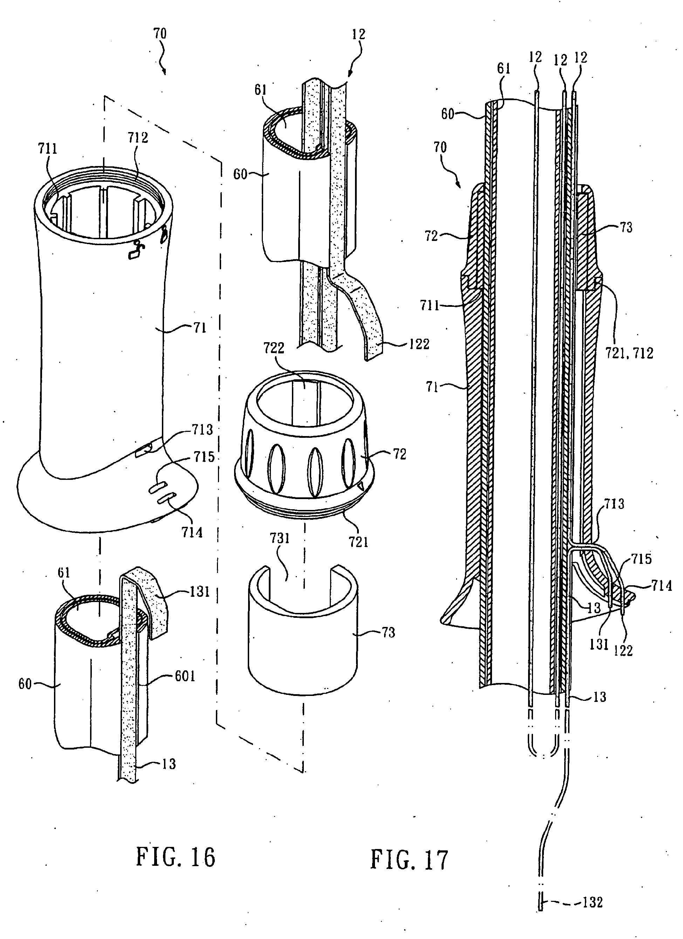

Now referring to **Figures 16** and **17****,** the first actuating unit **70** comprises a fixed member **71,** a rotatable member **72** and a C-shaped inner ring **73.** The fixed member **71** sheathes around the outer tube **60** and has an intrusive portion **711** for receiving the C-shaped inner ring **73.** The C-shaped inner ring **73** is attached on the outer tube **60.** The rotatable member **72** is mounted around the C-shaped inner ring **73** and has an externally threaded portion **721** at the bottom thereof combined with an interiorly threaded portion **712** at a top of the fixed member **71.** A prominent packing portion **722** is provided at an inner wall of the rotatable member **72** to be positioned in an opening **731** of the C-shaped inner ring **73.** While the rotatable member **72** can be rotated, the opening **731** of the C-shaped inner ring **73** substantially limits the displacement of the packing portion **722.** Thus, the rotatable angle of the rotatable member **72** is limited. Therefore, when the rotatable member **72** is rotated along one direction, the packing portion **722** abuts against the surface of the outer tube **60,** so that the first actuating unit **70** can be fixed outside the outer tube **60** and can not be pulled any more. On the contrary, when the rotatable member **72** is rotated along an opposite direction, the packing portion **722** is drawn apart from the surface of the outer tube **60,** so that the first actuating unit **70** can be pulled to shift along the outer tube **60** to and fro for a predetermined distance.

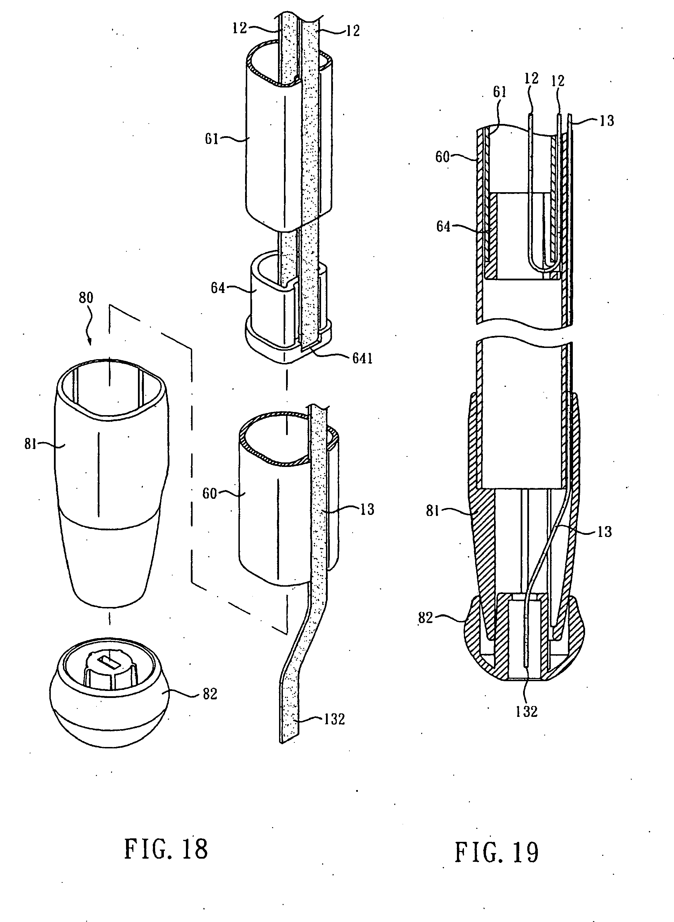

Reference is now made to **Figures 18** and **19****.** The second actuating unit **80** comprises a fixed member **81** and an actuating member **82.** The fixed member **81** is snugly fixed around the bottom of the outer tube **60.** The actuating member **82** is coupled with the bottom of the fixed member **81.** A second retaining piece **64** is provided at a bottom of the inner tube **61.**

According to the embodiment shown in **Figures 10** through **20****,** the disclosed lopper further comprises a second rope **12** and a third rope **13.** The second rope **12** is wound around the second pulley **622** of the pulley set **62,** and then two ends of the second rope **12** extend downward parallelly. The end **121** of the second rope **12** stretches into the inner tube **61;** passes around the second retaining piece **64** at the bottom of the inner tube **61;** and goes upward along the outer wall of the inner tube **61** to be fixed at a first wall hole **655** of the fixed member **66** of the extension-control unit **65.** The other end **122** of the second rope **12** stretches into the inner tube **61** for a predetermined distance; passes through a wall hole **611** of the inner tube **61** and a second wall hole **666** of the fixed member **66** of the extension-control unit **65;** turns inward again through a third wall hole **667;** goes downward along a groove **601** at the surface of the outer tube **60** to the first actuating unit **70;** passes through a first wall hole **713** of the fixed member **71;** and is fixed at a second wall hole **714.** The third rope **13** is arranged along the groove **601** at the surface of the outer tube **60.** One end **131** of the third rope **13** passes through the first wall hole **713** of the fixed member **71** of the first actuating unit **70** and is fixed at a third wall hole **715.** An opposite end **132** of the third rope **13** is fixed at the actuating member **82** of the second actuating unit **80.**

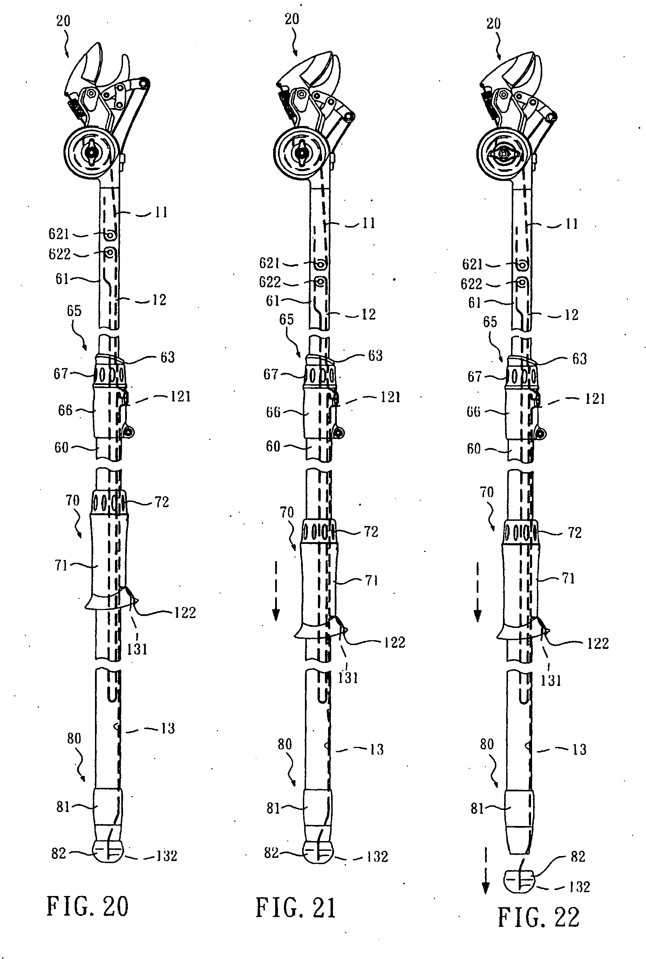

Hereinafter, referring to **Figures 21** and **22****,** actions and effects of the second and third ropes **12, 13** under operating the fist and second actuating units **70, 80** are illustrated.

In **Figure 21****,** when the first actuating unit **70** is pulled downward, the end **121** of the second rope **12** moves downward. At this time, since the other end **122** is fixed at the extension-control unit **65,** the second rope **12** pulled downward in turn draws the pulley set **62** downward so that the first pulley **621** pulls the first rope **11** downward to rotate the axial wheel **40** of the pruning mechanism **20** and consequently close the shear assembly **50.** Meanwhile, when the first actuating unit **70** is pulled downward, the end **131** of the third rope **13** is also pulled downward and the third rope **13** is bent.

When the fist actuating unit **70** is released from the state shown in **Figure 21****,** the returning spring **59** causes the shear assembly **50** opened, and the axial wheel **40,** the first rope **11,** the pulley set **62,** the second rope **12** in turn move reversely so the actuating unit **70** rises and returns to the initial position thereof.

According to **Figure 22****,** when the actuating member **82** of the second actuating unit **80** is pulled downward, the third rope **13** draws the fist actuating unit **70** downward to perform the same actions as shown in **Figure 21** so that the shear assembly **50** can be also closed in this way. On the contrary, when the actuating member **82** is released, the returning spring **59** causes the shear assembly **50** opened, and the axial wheel **40,** the first rope **11,** the pulley set **62,** the second rope **12** in turn move reversely so the actuating member **82** returns to the initial position thereof.

Thereupon, a user can implement either the first actuating unit **70** or the second actuating unit **80** to operate the shear assembly **50** according to his/her operational convenience.

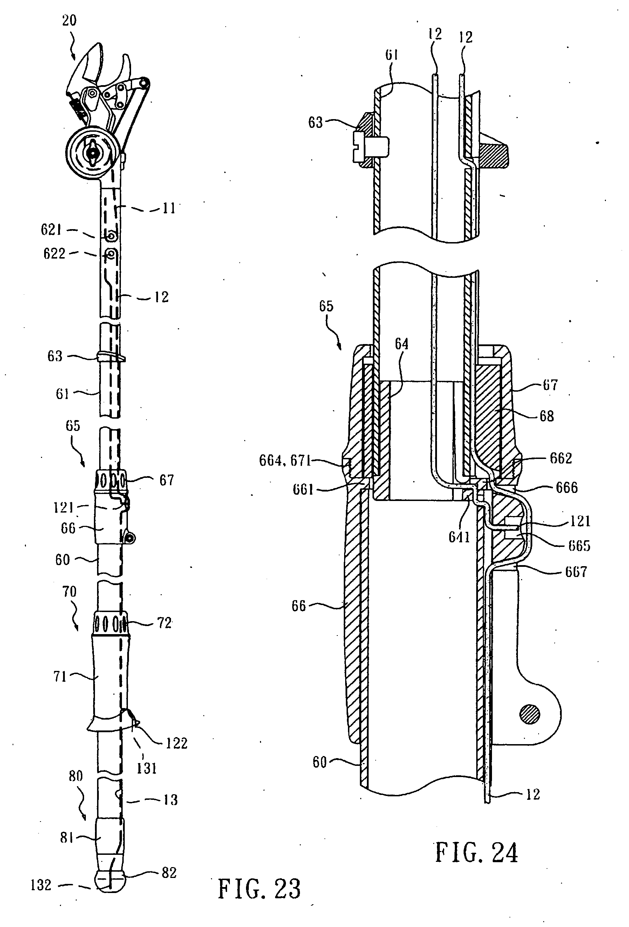

In **Figures 20** and **23****,** the extension of the inner tube **61** is illustrated. As shown in **Figure 20****,** the first retaining piece **63** attached to the inner tube **61** has reaches the rotatable member **67** of the extension-control unit **65** and the inner tube **61** can not move down any more. Therefore a basic length of the slender rod **10** is composed of a total length of the outer tube **60** and a length of a segment of the inner tube **61** currently jutting out from the outer tube **60.** In **Figure 23****,** the inner tube **61** is extremely pulled out from the outer tube **60.** Thus, a maximum length of the slender rod **10** is composed of a total length of the outer tube **60** and a length of a segment of the inner tube **61** currently jutting out from the outer tube **60.** In spite of the length of the segment of the inner tube **61** currently jutting out from the outer tube **60,** the second rope **12** can accommodate itself thereto, so that the shear assembly **50** can be always controlled by the fist and second actuating units **70, 80.**

In **Figure 18****,** the second retaining piece **64** of the inner tube **61** provides a retaining recess **641** while the intrusive portion **661** of the fixed member **66** of the extension-control unit **65** provides a retaining protrusion **662** as shown in **Figure 12****.** Thus, as can be seen in **Figure 24****,** when the inner tube **61** is extremely pulled out from the outer tube **60,** the retaining recess **641** of the second retaining piece **64** is coupled with the retaining protrusion **662** of the extension-control unit **65** so that the inner tube can be secured and free from leaving the outer tube **60.**

## Claims

1. A lopper, comprising:
a slender rod (10);
a pulley set (62), provided inside the slender rod;
a drum (21), mounted at a top of the slender rod;
an axial wheel (40), rotatably deposited in the drum;
a first rope (11), wound around the axial wheel and a first pulley of the pulley (621) set;
a fixed blade (51), fixed outside the drum;
a movable blade (52), having one end formed as a blade portion (521), an opposite end formed as a driving portion (524), and an intermediate pivot portion (522), where in the movable blade is connected to one end of the fixed blade at the pivot portion (512), and is swingable against where the movable blade and fixed blade is connected;
a linkage (53), connected to the fixed blade and the driving portion of the movable blade and equipped with a pulley (533) thereon;
a flexible linking componen (54), wound around the pulley of the linkage and having one end thereof fixed at the axial wheel (40) while an opposite end fixed to a positioning member deposited outside the drum; and
a returning spring (59), connected between the movable blade and the drum and exerting a resilience thereof upon the movable blade so as to separate the blade portion of the movable blade from the fixed blade.

2. The lopper of claim 1, wherein the axial (40) wheel includes a first reel (41) and a second reel (42) configured coaxially in which a diameter of the first reel is greater than a diameter of the second reel and one end of the first rope (11) is fixed to the first reel while one end of the flexible linking component (54) is fixed to the second reel.

3. The lopper of claim 1, wherein the linkage (53) is a two-piece linkage in which a first link (531) thereof has one end rotatably fastened to the fixed blade (51) by a pin (532) while an opposite end equipped with the pulley (533) and a second link (534) thereof has one end rotatably fastened to the first link by a pin (536) while an opposite end rotatably fastened to the driving portion of the movable blade by a pin (536).

4. The lopper of claim 1, wherein the drum (21) is constructed from combining a fixed portion (22) and a rotatable portion (30) face to face so that the axial wheel can be accommodated therein in which the fixed portion is fixed to the top of the slender rod (10); the fixed blade is fixed outside the rotatable portion; the positioning member (34) for receiving the end of the flexible linking component is deposited outside the rotatable portion; and the returning spring is connected between the movable blade and the rotatable portion.

5. The lopper of claim 4, wherein serrations (26,30) are formed at facing edges of the fixed portion and the rotatable portion, respectively.

6. The lopper of claim 5, wherein a manual-loosened bolt assembly (225) passes through the fixed portion, the rotatable portion, and a center of the axial wheel.

7. The lopper of claim 1, wherein the slender rod includes an outer tube (60), an inner tube (61) movably telescoped in and shiftabte along the outer tube, an extension-control unit (65) provided at a border region between the outer and inner tubes; and a first actuating unit (70) deposited at a body of the outer tube in which the pulley set is settled movably in the inner tube and further comprises a second pulley.

8. The lopper of claim 7, further comprising a second rope (12) wound around the second pulley (622) of the pulley set (62) wherein two ends of the second rope extend downward parallelly in the manner that one said end (121) stretches into the inner tube; passes around a bottom of the inner tube and goes upward along the outer wall of the inner tube to be fixed at the extension-control unit while the other end (122) stretches into the inner tube for a predetermined distance; pierces out from the inner tube; and goes downward along a groove (601) at an outer surface of the outer tube (60) to be fixed at the first actuating unit.

9. The lopper of claim 8, wherein the extension-control unit comprises a fixed member and a rotatable member in which the fixed member is fixed outside a top of the outer tube while the rotatable member is rotatably connected with the fixed member and snugly sheathes outside the inner tube, wherein a prominent packing portion (672) is provided on the inner wall of the rotatable member so that when the rotatable member is rotated along one direction for a predetermined angle, the packing portion abuts against an outer surface of the inner tube.

10. The lopper of claim 9, further comprising a C-shaped inner ring (68) fixed at a top of the fixed member and positioned inside the rotatable member, wherein the inner tube pierces through the C-shaped inner ring and the packing portion is aligned to an opening of the C-shaped inner ring.

11. The lopper of claim 8, wherein the first actuating unit comprises a fixed member and a rotatable member in which the fixed member is fixed around the outer tube and the rotatable member is rotatably connected with the fixed member and snugly sheathes outside the outer tube, wherein a prominent packing portion is provided on the inner wall of the rotatable member so that when the rotatable member is rotated along one direction for a predetermined angle, the packing portion abuts against the outer surface of the outer tube, and two ends of the second rope are fixed at the fixed member of the first actuating unit.

12. The lopper of claim 11, further comprising a C-shaped inner ring fixed at a top of the fixed member and positioned inside the rotatable member so as to snugly sheathe around the outer surface of the outer tube, wherein the packing portion is aligned to an opening (731) of the C-shaped inner ring.

13. The lopper of claim 8, further comprising a second actuating unit (80) deposited at a bottom of the outer tube.

14. the lopper of claim 13, further comprising a third rope (14), wherein the third rope is arranged along the outer surface of the outer tube in which one end thereof passes is fixed at the first actuating unit and an opposite end thereof is fixed at the second actuating unit.

15. The lopper of claim 14, wherein the second actuating unit comprises a fixed member (81) and an actuating member (82) in which the fixed member is snugly fixed around the bottom of the outer tube and the actuating member is coupled with the bottom of the fixed member and one end of the third rope is fixed to the actuating member.

16. The lopper of claim 7, wherein a first retaining piece (63) is fixed at the outer surface of the inner tube above the extension-control unit, and a second retaining piece (64) is provided at a bottom of the inner tube.

17. The lopper of claim 16, wherein the second retaining piece comprise a retaining recess (641) and the extension-control unit comprises a retaining protrusion (662) such that the retaining protrusion is used to retain the retaining recess.

## Patentansprüche

1. Baumbeschneidevorrichtung, aufweisend:
eine schlanke Stange (10);
ein innerhalb der schlanken Stange vorgesehenes Rollen-Set (62);
eine an einem oberen Bereich der schlanken Stange angebrachte Trommel (21);
ein drehbar in der Trommel angeordnetes axiales Rad (40);
ein um das axiale Rad und um eine erste Rolle (621) des Rollen-Sets gewundenes, erstes Seil (11);
eine außerhalb der Trommel befestigte, feststehende Klinge (51);
eine bewegbare Klinge (52) mit einem als Klingenabschnitt (521) ausgebildeten Ende, einem als Antriebsabschnitt (524) ausgebildeten, gegenüberliegenden Ende und einem dazwischenliegenden Schwenkabschnitt (522), wobei die bewegbare Klinge an dem Schwenkabschnitt (522) mit einem Ende der feststehenden Klinge verbunden ist und um den Bereich, welcher die bewegbare Klinge mit der feststehenden Klinge verbindet, schwenkbar ist;
eine Verbindungsvorrichtung (53), welche mit der feststehenden Klinge und dem Antriebsabschnitt der bewegbaren Klinge verbunden ist und mit einer Rolle (533) daran ausgestattet ist;
ein flexibles Verbindungsteil (54), welches um die Rolle der Verbindungsvorrichtung gewunden ist und dessen eines Ende an dem axialen Rad (40) befestigt ist, wobei ein entgegengesetztes Ende an einem außerhalb der Trommel angeordneten Positionierelement befestigt ist; und
eine Rückstellfeder (59), welche zwischen die bewegbare Klinge und die Trommel gekuppelt ist und eine Spannkraft auf die bewegbare Klinge ausübt, so dass der Klingenabschnitt der bewegbaren Klinge von der feststehenden Klinge getrennt wird.

2. Baumbeschneidevorrichtung nach Anspruch 1, wobei das axiale Rad (40) eine erste Spule (41) und eine zweite Spule (42) aufweist, welche koaxial angeordnet sind, und wobei ein Durchmesser der ersten Spule größer ist, als ein Durchmesser der zweiten Spule, wobei ein Ende des ersten Seils (11) an der ersten Spule befestigt ist und wobei ein Ende des flexiblen Verbindungsteils (54) an der zweiten Spule befestigt ist.

3. Baumbeschneidevorrichtung nach Anspruch 1, wobei die Verbindungsvorrichtung (53) eine zweiteilige Verbindungsvorrichtung ist, wobei ein erstes Verbindungsglied (531) davon ein Ende hat, das mittels eines Bolzens (532) schwenkbar an der feststehenden Klinge (51) befestigtes ist, wobei ein gegenüberliegendes Ende mit der Rolle (533) ausgestattet ist, und wobei ein zweites Verbindungsglied (534) davon ein Ende hat, das mittels eines Bolzens (535) schwenkbar an dem ersten Verbindungsglied befestigt ist, wobei ein gegenüberliegendes Ende mittels eines Bolzens (536) schwenkbar an dem Antriebsabschnitt der bewegbaren Klinge befestigt ist.

4. Baumbeschneidevorrichtung nach Anspruch 1, wobei die Trommel (21) einen feststehenden Bereich (22) und einen schwenkbaren Bereich (30) aufweist, welche einander zugewandt angeordnet sind, so dass das axiale Rad darin aufgenommen werden kann, wobei der feststehende Bereich an dem oberen Bereich der schlanken Stange (10) befestigt ist, wobei die feststehende Klinge außerhalb des schwenkbaren Bereichs befestigt ist, wobei das Positionierelement (34) zum Aufnehmen des Endes des flexiblen Verbindungsteils außerhalb des schwenkbaren Bereichs angeordnet ist, und wobei die Rückstellfeder zwischen die bewegbare Klinge und den schwenkbaren Bereich gekuppelt ist.

5. Baumbeschneidevorrichtung nach Anspruch 4, wobei Verzahnungen (26, 35) jeweils an einander zugewandten Rändern des feststehenden Bereichs und des schwenkbaren Bereichs ausgebildet sind.

6. Baumbeschneidevorrichtung nach Anspruch 5, wobei eine manuell lockerbare Bolzenanordnung (25) durch den feststehenden Bereich, den schwenkbaren Bereich und ein Zentrum des axialen Rads hindurch verläuft.

7. Baumbeschneidevorrichtung nach Anspruch 1, wobei die schlanke Stange aufweist: ein äußeres Rohr (60), ein inneres Rohr (61), welches in dem äußeren Rohr teleskopartig untergebracht und entlang dem äußeren Rohr verschiebbar ist, eine an einem Angrenzungsbereich zwischen dem äußeren und dem inneren Rohr vorgesehene Ausdehnungs-Steuervorrichtung (65) und eine an einem Körper des äußeren Rohrs angeordnete, erste Betätigungsvorrichtung (70), wobei das Rollen-Set bewegbar im inneren Rohr angeordnet ist und ferner eine zweite Rolle aufweist.

8. Baumbeschneidevorrichtung nach Anspruch 7, ferner aufweisend ein um die zweite Rolle (622) des Rollen-Sets (62) gewundenes, zweites Seil (12), wobei sich die zwei Enden des zweiten Seils parallel nach unten erstrecken, so dass sich das eine Ende (121) in das innere Rohr erstreckt, um einen unteren Teil des inneren Rohrs herum verläuft und entlang der Außenwand des inneren Rohrs nach oben verläuft, um an der Ausdehnungs-Steuervorrichtung befestigt zu sein, wobei das andere Ende (122) sich über eine vorgegebene Distanz in das innere Rohr hinein erstreckt, aus dem inneren Rohr heraustritt und entlang einer Nut (601) an einer Außenfläche des äußeren Rohrs (60) nach unten verläuft, um an der ersten Betätigungsvorrichtung befestigt zu sein.

9. Baumbeschneidevorrichtung nach Anspruch 8, wobei die Ausdehnungs-Steuervorrichtung ein feststehendes Element und ein schwenkbares Element aufweist, wobei das feststehende Element außen an einem oberen Bereich des äußeren Rohrs befestigt ist, wobei das schwenkbare Element schwenkbar mit dem feststehenden Element verbunden ist und das innere Rohr außen eng anliegend umhüllt, wobei ein hervorstehender Klemmabschnitt (672) an der Innenwand des schwenkbaren Elements vorgesehen ist, so dass der Klemmabschnitt an einer Außenfläche des inneren Rohrs anliegt, wenn das schwenkbare Element entlang einer Richtung um einen vorgegebenen Winkel rotiert ist.

10. Baumbeschneidevorrichtung nach Anspruch 9, ferner aufweisend einen an einem oberen Bereich des feststehenden Elements befestigten und innerhalb des schwenkbaren Elements positionierten, C-förmigen inneren Ring (68), wobei das innere Rohr durch den C-förmigen inneren Ring hindurch verläuft und der Klemmabschnitt zu einer Öffnung des C-förmigen inneren Rings ausgerichtet ist.

11. Baumbeschneidevorrichtung nach Anspruch 8, wobei die erste Betätigungsvorrichtung ein feststehendes Element und ein schwenkbares Element aufweist, wobei das feststehende Element um das äußere Rohr herum befestigt ist und das schwenkbare Element schwenkbar mit dem feststehenden Element verbunden ist und das äußere Rohr außen eng anliegend umhüllt, wobei ein hervorstehender Klemmabschnitt an der Innenwand des schwenkbaren Elements vorgesehen ist, so dass der Klemmabschnitt an der Außenfläche des äußeren Rohrs anliegt, wenn das schwenkbare Element entlang einer Richtung um einen vorgegebenen Winkel rotiert ist, und wobei zwei Enden des zweiten Seils an dem feststehenden Element der ersten Betätigungseinheit befestigt sind.

12. Baumbeschneidevorrichtung nach Anspruch 11, ferner aufweisend einen so an einem oberen Bereich des feststehenden Elements befestigten und innerhalb des schwenkbaren Elements positionierten, C-förmigen inneren Ring, dass der C-förmige innere Ring eng anliegend die Außenfläche des äußeren Rohrs umhüllt, wobei der Klemmabschnitt zu einer Öffnung (731) des C-förmigen inneren Rings ausgerichtet ist.

13. Baumbeschneidevorrichtung nach Anspruch 8, ferner aufweisend eine an einem unteren Bereich des äußeren Rohrs angeordnete, zweite Betätigungsvorrichtung (80).

14. Baumbeschneidevorrichtung nach Anspruch 13, ferner aufweisend ein drittes Seil (13), wobei das dritte Seil entlang der Außenfläche des äußeren Rohrs angeordnet ist, wobei ein Ende des dritten Seils an der ersten Betätigungsvorrichtung befestigt ist und ein entgegengesetztes Ende des dritten Seils an der zweiten Betätigungsvorrichtung befestigt ist.

15. Baumbeschneidevorrichtung nach Anspruch 14, wobei die zweite Betätigungsvorrichtung ein feststehendes Element (81) und ein Betätigungselement (82) aufweist, wobei das feststehende Element eng anliegend um einen unteren Bereich des äußeren Rohrs herum befestigt ist, das Betätigungselement mit der Unterseite des feststehenden Elements gekuppelt ist und ein Ende des dritten Seils an dem Betätigungselement befestigt ist.

16. Baumbeschneidevorrichtung nach Anspruch 7, wobei ein erstes Halteteil (63) an der Außenfläche des inneren Rohrs oberhalb der Ausdehnungs-Steuervorrichtung befestigt ist und ein zweites Halteteil (64) an einem unteren Bereich des inneren Rohrs vorgesehen ist.

17. Baumbeschneidevorrichtung nach Anspruch 16, wobei das zweite Halteteil eine Halteaussparung (641) aufweist und die Ausdehnungs-Steuervorrichtung einen Haltevorsprung (662) aufweist, so dass der Haltevorsprung verwendet wird, um die Halteaussparung zu halten.

## Revendications

1. Ebranchoir comprenant : une tige mince (10) ;
un ensemble de poulies (62), aménagé à l'intérieur de la tige mince ;
un tambour (21) monté sur la partie supérieure de la tige mince ;
une roue axiale (40) déposée à rotation dans le tambour ;
un premier câble (11) enroulé autour de la roue axiale et d'une première poulie de l'ensemble de poulies (621) ;
une lame fixe (51) fixée à l'extérieur du tambour ;
une lame mobile (52) ayant une extrémité sous la forme d'une partie de lame (521), une extrémité opposée sous la forme d'une partie d'entraînement (524) et une partie de pivot intermédiaire (522), la lame mobile étant raccordée à une extrémité de la lame fixe sur la partie pivot (512) et pouvant pivoter à l'endroit où sont raccordées la lame mobile et la lame fixe ;
une liaison (53) raccordée à la lame fixe et à la partie d'entraînement de la lame mobile et portant une poulie (533) ;
un composant de liaison flexible (54) enroulé autour de la poulie ou de la liaison et ayant une de ses extrémités fixée à la roue axiale (40), tandis qu'une extrémité opposée fixée à un élément de positionnement est déposée à l'extérieur du tambour ; et
un ressort de rappel (59) raccordé entre la lame mobile et le tambour et exerçant sa résilience sur la lame mobile afin de séparer la partie de lame de la lame mobile de la lame fixe.

2. Ebranchoir selon la revendication 1, dans lequel la roue axiale (40) comprend une première bobine (41) et une seconde bobine (42) configurées coaxialement, où le diamètre de la première bobine est supérieur au diamètre de la seconde bobine et une extrémité du premier câble (11) est fixée à la première bobine, tandis qu'une extrémité du composant de liaison flexible (54) est fixée à la seconde bobine.

3. Ebranchoir selon la revendication 1, dans lequel la liaison (53) est une liaison double, dans laquelle une première liaison (531) a une extrémité montée à rotation sur la lame fixe (51) par une broche (532), tandis qu'une extrémité opposée est équipée de la poulie (533), et une seconde liaison (534) a une extrémité montée à rotation sur la première liaison par une broche (535), tandis qu'une extrémité opposée est montée à rotation sur la partie d'entraînement de la lame mobile par une broche (536).

4. Ebranchoir selon la revendication 1, dans lequel le tambour (21) est construit en combinant une partie fixe (22) et une partie rotative (30) face à face de sorte que la roue axiale puisse y être logée, où la partie fixe est fixée à la partie supérieure de la tige mince (10) ; la lame fixe est fixée à l'extérieur de la partie rotative ; l'élément de positionnement (34) pour recevoir l'extrémité du composant de liaison flexible est déposé à l'extérieur de la partie rotative ; et le ressort de rappel est raccordé entre la lame mobile et la partie rotative.

5. Ebranchoir selon la revendication 4, dans lequel des stries (26, 30) sont formées sur les bords en vis-à-vis de la partie fixe et la partie rotative, respectivement.

6. Ebranchoir selon la revendication 5, dans lequel un assemblage de boulonnage relâché à la main (25) traverse la partie fixe, la partie rotative et un centre de la roue axiale.

7. Ebranchoir selon la revendication 1, dans lequel la tige mince comprend un tube externe (60), un tube interne (61) emboîté de manière mobile et pouvant être décalé le long du tube externe, une unité de commande d'extension (65) ménagée dans une région de bordure entre les tubes externe et interne, et une première unité d'actionnement (70) déposée sur un corps du tube externe, dans lequel l'ensemble de poulies est établi de manière mobile dans le tube interne et comprend en outre une seconde poulie.

8. Ebranchoir selon la revendication 7, comprenant en outre un second câble enroulé autour de la seconde poulie (622) sur l'ensemble de poulies (62), dans lequel deux extrémités du second câble s'étendent parallèlement vers le bas de sorte qu'une seule dite extrémité (121) s'étende dans le tube interne ; passe autour d'une partie inférieure du tube interne et remonte le long de la paroi externe du tube interne à fixer sur l'unité de commande d'extension, tandis que l'autre extrémité (122) s'étend dans le tube interne sur une distance prédéterminée ; sort du tube interne en le perçant; et descend le long d'une rainure (601) sur une surface externe du tube externe (60) à fixer sur la première unité d'actionnement.

9. Ebranchoir selon la revendication 8, dans lequel l'unité de commande d'extension comprend un élément fixe et un élément rotatif, dans lequel l'élément fixe est fixé à l'extérieur d'une partie supérieure du tube externe, tandis que l'élément rotatif est raccordé à rotation avec l'élément fixe et recouvre parfaitement l'extérieur du tube interne, dans lequel une partie de garniture saillante (672) est aménagée sur la paroi interne de l'élément rotatif de sorte que, lorsque l'élément rotatif est soumis à une rotation le long d'une direction sur un angle prédéterminé, la partie de garniture s'appuie contre une surface externe du tube interne.

10. Ebranchoir selon la revendication 9, comprenant en outre un anneau interne en forme de C (68) fixé sur une partie supérieure de l'élément fixe et positionné à l'intérieur de l'élément rotatif, dans lequel le tube interne perce l'anneau interne en forme de C et la partie de garniture est alignée sur une ouverture de l'anneau interne en forme de C.

11. Ebranchoir selon la revendication 8, dans lequel la première unité d'actionnement comprend un élément fixe et un élément rotatif, dans lequel l'élément fixe est fixé autour du tube externe et l'élément rotatif est raccordé à rotation avec l'élément fixe et recouvre parfaitement l'extérieur du tube externe, dans lequel une partie de garniture saillante est aménagée sur la paroi interne de l'élément rotatif afin que, lorsque l'élément rotatif est soumis à une rotation le long d'une direction sur un angle prédéterminé, la partie de garniture s'appuie contre la surface externe du tube externe et deux extrémités du second câble sont fixées à l'élément fixe de la première unité d'actionnement.

12. Ebranchoir selon la revendication 11, comprenant en outre un anneau interne en forme de C fixé sur une partie supérieure de l'élément fixe et positionné à l'intérieur de l'élément rotatif de manière à recouvrir parfaitement la surface externe du tube externe, dans lequel la partie de garniture est alignée sur une ouverture (731) de l'anneau interne en forme de C.

13. Ebranchoir selon la revendication 8, comprenant en outre une seconde unité d'actionnement (80) déposée sur une partie inférieure du tube externe.

14. Ebranchoir selon la revendication 13, comprenant en outre un troisième câble (13), dans lequel le troisième câble est aménagé le long de la surface externe du tube externe, dans lequel une de ses extrémités est fixée à la première unité d'actionnement et son extrémité opposée est fixée à la seconde unité d'actionnement.

15. Ebranchoir selon la revendication 14, dans lequel la seconde unité d'actionnement comprend un élément fixe (81) et un élément d'actionnement (82), dans lequel l'élément fixe est parfaitement fixé autour de la partie inférieure du tube externe et l'élément d'actionnement est couplé à la partie inférieure de l'élément fixe et une extrémité du troisième câble est fixée à l'élément d'actionnement.

16. Ebranchoir selon la revendication 7, dans lequel une première pièce de retenue (63) est fixée sur la surface externe du tube interne au-dessus de l'unité de commande d'extension et une seconde pièce de retenue est aménagée sur une partie inférieure du tube interne.

17. Ebranchoir selon la revendication 16, dans lequel la seconde pièce de retenue comprend un évidement de retenue (641) et l'unité de commande d'extension comprend une saillie de retenue (662) de sorte que la saillie de retenue soit utilisée pour retenir l'évidement de retenue.
